# EUROPEAN PATENT APPLICATION

(11) **EP 4 755 484 A1**
(43) Date of publication of application: **10.06.2026**
(21) Application number: 25221241.0
(22) Date of filing: 05.12.2025
(51) Int. Cl.: B01D 1/28, B01D 3/00, B01D 3/06

(54) **METHOD AND SYSTEM FOR DISTILLING ALCOHOL IN AN ALCOHOL PRODUCTION PROCESS UTILIZING MECHANICAL VAPOR RECOMPRESSION**

(30) Priority: 06.12.2024 US 202463728968 P
(71) Applicant: Fluid Quip Technologies, LLC, Cedar Rapids, Iowa 52402 (US)
(72) Inventor: Rudd, Aaron, Marion IA, 52302 (US); McKenzie, Kaitlin, Cedar Rapids IA, 52402 (US)
(74) Representative: Wallinger Ricker Schlotter Tostmann

(57) **Abstract**

A method and system for distilling alcohol in an alcohol production process utilizes mechanical vapor recompression (MVR), by way of an MVR device, such as to improve vacuum distillation column capacity. The MVR device is used as a way to increase vapor pressure/density and reduce vapor volume providing for increased volumetric flowrate and thereby increasing the capacity of a distillation system. In particular, the MVR takes a low value waste heat from stillage evaporators and compresses it to a higher temperature/pressure to create useful energy. By raising the pressure in the beer column with an MVR device, the vapor density increases, vapor volume decreases, and vapor velocity increases so that more vapor can be fed to and through the beer column. That is, additional mass flow can be added to the stillage evaporators and beer column to return the overall vapor velocity at the beer column to the original velocity constraint point. As such, the throughput of the beer column can be increased until it reaches its original velocity design constraint.

## Description

### Technical Field

The present invention relates generally to producing alcohol (e.g., ethanol) and/or other biofuels/biochemicals and, more specifically, to a method and system for distilling alcohol in an alcohol production process utilizing mechanical vapor recompression, such as to improve vacuum distillation column capacity.

### Background

Fuel grade alcohol (e.g., ethanol) distilled from grain (e.g., corn) has become increasingly popular as an alternative to gasoline. Additionally, ethanol has increased in popularity as a gasoline additive for formulating clean burning grades of gasoline for motor vehicles.

One method of producing ethanol includes using a corn dry-milling process. Dry milling ethanol plants generally convert corn and/or other grains into three products, i.e., ethanol, distillers grain oil, and distiller's grains with solubles. A typical grain dry milling process consists of four major steps: grain handling and milling, liquefaction and saccharification, fermentation and distillation, and co-product recovery. Grain handling and milling is the step in which the grain is brought into the plant and ground to promote better conversion of starch to glucose. Liquefaction is the step of converting solids, such as starch, to a flowable liquid producing oligosaccharides and saccharification is where the oligosaccharides are converted into single glucose molecules. Fermentation is the process of yeast or bacteria, or as clostridia, for example, converting glucose into a biofuel or a biochemical/biomolecule, such as ethanol. Distillation is the process of removing the biofuel or biochemical/biomolecule, such as ethanol, from the fermentation product. Co-product recovery is the step in which the grain by-products are de-watered and made ready for market. There are many known chemical and biological conversion processes known in the art that utilize yeast, bacteria, or the like to convert glucose/sugar to other biofuels and biochemical/biomolecule components like ethanol, for example.

The recovery of alcohol, e.g., butanol, ethanol (a natural co-product), etc., and other similar compounds, generally begins with the beer (spent fermentation broth) being sent to a distillation system. With distillation, ethanol is typically separated from the rest of the beer through a set of stepwise vaporizations and condensations. To produce fuel grade ethanol, more than one interconnected distillation column is typically used to progressively purify the ethanol product. In a typical ethanol distillation process, a beer column receives beer and produces an intermediate ethanol vapor. A rectifier column receives the intermediate ethanol vapor from the beer column and produces about 190 proof or about 95% pure ethanol vapor. A third, side stripper column receives bottoms from the rectifier column and then produces an intermediate ethanol overhead vapor that is further purified by the rectifier column. The ethanol free bottoms from the side stripper column can be used to formulate cook water for the fermentation portion of the process. Because of the physical properties of an ethanol water solution, a distillation process can only practically produce an ethanol water solution that is approximately 95% ethanol and 5% water. A dehydrator is used to remove most of the remaining water to produce higher purity product. The dehydrator receives the 95% ethanol vapor and removes nearly all of the remaining water to produce ethanol having a water content typically of less than about 1.0%. A dehydrator may contain beads of material that attract or retain water molecules to a greater degree than ethanol molecules.

One issue with many current distillation systems is that its capacity (e.g., the capacity of the beer column(s)) is limited by vapor velocity, which is related to the volume of vapor in the beer column and the cross sectional area of the column and, thus, limited by the volumetric flowrate. In particular, as waste heat (e.g., effect steam) is generated via the stillage evaporators in a dry milling setup, steam pressure (vapor velocity) tends to decrease as it moves, for example, from a first effect stillage evaporator to a second effect evaporator towards the distillation system. As a result, the energy potential of the steam decreases on its path to the distillation/beer colum. This lower value, lower energy waste heat can negatively impact distillation/beer column efficiency and create bottlenecking thereat in the alcohol production process.

Accordingly, it would be beneficial to provide a method and system for distilling alcohol in an alcohol production process that creates a more useful energy from waste heat from the stillage (or similar) evaporator(s) such as to improve vacuum distillation column capacity, and to do so in an economical manner.

### Summary

The present invention relates to producing alcohol (e.g., ethanol) and/or other biofuels/biochemicals and, more specifically, to a method and system for distilling alcohol in an alcohol production process utilizing mechanical vapor recompression (MVR), via an MVR device, such as to improve vacuum distillation column capacity.

The MVR device can be used in the method and system as a way to increase vapor pressure/density and reduce vapor volume providing for increased volumetric flowrate and thereby increasing the capacity of a distillation system. In particular, the MVR takes a low value waste heat stream from stillage evaporators and compresses it to a higher temperature/pressure to create useful energy. By raising the pressure and resulting temperature in the beer column with an MVR device, the vapor density increases, vapor volume decreases, and vapor velocity increases so that more vapor and liquid can be fed to and through the beer column. That is, additional mass flow can be added to the stillage evaporators and beer column to return the overall vapor velocity at the beer column to the original velocity constraint point. As such, the throughput of the beer column can be increased until it reaches its original velocity design constraint.

In one embodiment, an MVR device can be situated in the method and system to receive second effect evaporator steam so as to increase the vapor pressure/vapor density thereof and reduce vapor volume providing for an increased volumetric flowrate of steam/vapor, which can be directed to the base of the beer column and drive the column. Due to the increased pressure, the temperature of the outgoing vapor from the MVR naturally increases and may be subjected to cooling (de-superheating) by directly or indirectly coming into contact with lower temperature liquid(s)/gases, such as via a spray nozzle(s) and/or a heat exchanger(s), prior to being sent to the distillation column. In many current distillations, the pressure of the vapor stream that is sent to the beer column can be 7 to 9 psia. In one example, an MVR device can raise the pressure to about 12 to 13 psia. The increased pressure can desirably raise the density of the vapor/steam by about 50%. In turn, the vapor volume - at equal mass flow - can drop by about 33%. Increasing the pressure of the 2^{nd} effect evaporator vapors/steam can increase the pressure of the beer column as well as the side stripper and rectifier, thereby helping to eliminate bottlenecking thereat and increasing equipment capacity by up to 20% or more.

In another embodiment, a method for distilling alcohol in an alcohol production process is provided that includes fermenting a mixture of water and milled grain to produce alcohol-laden beer, distilling the alcohol-laden beer in a beer column maintained at a subatmospheric pressure to produce a vapor, including alcohol, and whole stillage, and separating thin stillage from the whole stillage. Next, water from all or a portion of the separated thin stillage is evaportated via one or more evaporators to produce a first effect steam from evaporation of the water from the thin stillage to produce a first-concentrated thin stillage from the evaporation of the thin stillage, wherein the one or more evaporators and the one or more other evaporators together define a first effect evaporator system. Then, water from the first-concentrated thin stillage is evaporated via one or more additional evaporators defining a second effect evaporator system with heat from the first effect steam to produce second-concentrated thin stillage and second effect steam. Next, at least a portion of the second effect steam, which defines incoming second effect steam, is supplied to mechanical vapor recompression to produce outgoing steam with increased vapor pressure and increased temperature relative to the incoming second effect steam. And then, the outgoing steam from the mechanical vapor recompression is supplied to a distillation column for distilling the alcohol-laden beer to produce alcohol whereby throughput of the distillation column is increased.

In another embodiment, a method for distilling alcohol in an alcohol production process is provided that includes fermenting a mixture of water and milled grain to produce alcohol-laden beer, distilling the alcohol-laden beer in a beer column maintained at a subatmospheric pressure to produce a vapor, including alcohol, and whole stillage, and separating thin stillage from the whole stillage. Next, water from all or a portion of the separated thin stillage is evaporated via one or more evaporators to produce a first effect steam from evaporation of the water from the thin stillage to produce a first-concentrated thin stillage from the evaporation of the thin stillage, wherein the one or more evaporators and the one or more other evaporators together define a first effect evaporator system. Then, water from the first-concentrated thin stillage is evaporated via one or more additional evaporators defining a second effect evaporator system with heat from the first effect steam to produce second-concentrated thin stillage and second effect steam. Next, at least a portion of the second effect steam, which defines incoming second effect steam, is supplied to a mechanical vapor recompression device to produce outgoing steam with increased vapor pressure and increased temperature relative to the incoming second effect steam. And then, the outgoing steam from the mechanical vapor recompression device is cooled and the cooled steam is supplied to the beer column or a rectifier column for distilling the alcohol-laden beer to produce alcohol whereby throughput of the beer column is increased.

In still another embodiment, a system for distilling alcohol in an alcohol production process is provided that includes a beer column that receives alcohol-laden beer, the beer column distills the alcohol-laden beer at a subatmospheric pressure to produce a vapor, including ethanol, and whole stillage. A separation device is situated after the beer column and receives the whole stillage and separates thin stillage from the whole stillage. A first effect evaporator system includes one or more evaporators that receive all or a portion of the thin stillage from the separation device with the one or more evaporators configured to evaporate water from the thin stillage to produce first-concentrated thin stillage. The first effect evaporator system is configured to produce a first effect steam from the evaporation of the water from the thin stillage. A second effect evaporator system is situated after the first effect evaporator system and includes one or more evaporators, which receive the first-concentrated thin stillage and evaporate water from the first-concentrated thin stillage with heat from the first effect steam to produce second-concentrated thin stillage and second effect steam. A mechanical vapor recompression (MVR) device is situated after the second effect evaporator system and receives at least a portion of the second effect steam, which defines incoming second effect steam. The MVR device is configured to produce outgoing steam with increased vapor pressure and increased temperature relative to the incoming second effect steam. A distillation column for distilling the alcohol-laden beer to produce alcohol selected from the beer column or a rectifier column receives the outgoing steam from the MVR device such that throughput of the beer column is increased.

### Brief Description of the Drawings

The accompanying drawings, which are incorporated in and constitute a part of this specification, illustrate embodiments of the invention and, together with a general description of the invention given above, and the detailed description of the embodiments given below, serve to explain the principles of the invention.
Fig. 1 is a flow diagram of a typical dry grind alcohol production process;
Fig. 2 is a flow diagram of a method and system for distilling alcohol in an alcohol production process utilizing mechanical vapor recompression in accordance with an embodiment of the invention;
Fig. 2A is a variation of the flow diagram of the method and system of Fig. 2 in accordance with another embodiment of the invention;
Fig. 3 is a flow diagram showing the distillation and separation processes of the method and system of Figs. 2 and 2A;
Fig. 4 is a flow diagram showing the dehydration process of the method and system of Fig. 2; and
Fig. 5 is a flow diagram showing the evaporation process of the method and system of Fig. 2.

### Detailed Description of Specific Embodiments

The present invention relates to producing alcohol (e.g., ethanol) and/or other biofuels/biochemicals and, more specifically, to a method and system for distilling alcohol in an alcohol production process utilizing one or more mechanical vapor recompression (MVR) devices such as to improve vacuum distillation column capacity. While grain based distillation systems are discussed herein, it should be understood that MVR/the MVR device may be utilized in non-grain based distillation systems, such as petrochemical based distillation and dehydration systems. In addition, the method and system for distilling alcohol in an alcohol production process similarly can be utilized to improve pressure/atmospheric distillation systems as well as vacuum distillation systems.

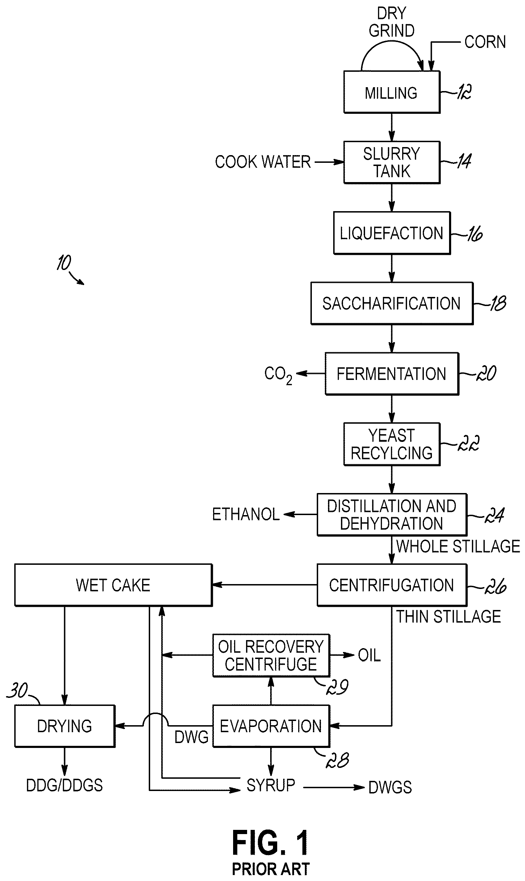

Fig. 1 shows a flow diagram of a typical dry grind alcohol (e.g., ethanol) production method 10. Although virtually any type and quality of grain, such as but not limited to sorghum, wheat, triticale, barley, rye, tapioca, cassava, potato, pea and other starch and/or oil containing grains and/or legumes can be used to produce ethanol and/or a biochemical/biomolecule, for example, the feedstock for this process is typically corn referred to as "No. 2 Yellow Dent Corn." Also, as a general reference point, the dry grind method 10 can be divided into a front end and a back end. The part of the method 10 that occurs up to and including distillation 24 is considered the "front end," and the part of the method 10 that occurs after distillation 24 is considered the "back end." To that end, the front end of the dry grind method 10 begins with a milling step 12 in which dried whole corn kernels can be passed through hammer mills for grinding/milling into meal or a fine powder. The screen openings in the hammer mills or similar devices typically are of a size 6/64 to 9/64 inch, or about 2.38 mm to 3.57 mm, but some plants can operate at less than or greater than these screen sizes. The resulting particle distribution yields a very widely spread, bell type curve, which includes particle sizes as small as 45 microns and as large as 2 mm to 3 mm. The majority of the particles tend to be in the range of 500 to 1200 microns, which is the "peak" of the bell curve. Other screen openings larger and smaller can be deployed in the hammer mills. Other milling devices such as roller mills or pin mills can also be utilized in the dry grain grinding step.

After the milling step 12, the ground meal is mixed with cook water to create a slurry at the slurry tank 14 and a commercial enzyme called alpha-amylase is typically added (not shown). Creating the slurry at the slurry tank 14 is followed by a liquefaction step 16 whereat the pH is adjusted to about 4.8 to 5.8 and the temperature maintained between about 50°C to 105°C so as to convert the insoluble starch in the slurry to soluble starch. The stream after the liquefaction step 16 has about 30% dry solids (DS) content, but can range from about 29-36%, with all the components contained in the corn kernels, including starch/sugars, protein, fiber, starch, germ, grit, oil, and salts, for example. Higher solids are achievable, but this requires extensive alpha amylase enzyme to rapidly breakdown the viscosity in the initial liquefaction step. There generally are several types of solids in the liquefaction stream: fiber, germ, and grit.

Liquefaction 16 may be followed by separate saccharification and fermentation steps, 18 and 20, respectively, although in most commercial dry grind ethanol processes, saccharification and fermentation can occur simultaneously. This single step is referred to in the industry as "Simultaneous Saccharification and Fermentation" (SSF). Both saccharification and SSF can take as long as about 50 to 60 hours. Gluco-Amylase enzyme is typically added to the fermentation step 20 that facilitates the further breakdown of the starches and larger polysaccharides into single monomer sugar molecules that the yeast consumes to produce ethanol (or other similar alcohols) and carbon dioxide. Yeast can optionally be recycled in a yeast recycling step 22 either during the fermentation process or at the very end of the fermentation process. Yeast produced during the fermentation process will pass through to the distillation and dehydration step 24. In addition to the gluco-amylase being added, other enzymes can be added (such as but not limited to phytase, protease, cellulase, hemicellulose, xylanase, beta-glucanase, and the like) that can further enhance the protein and oil recovery downstream. Subsequent to the fermentation step 20 is the distillation (and dehydration) step 24, which utilizes a still to recover the alcohol (e.g., ethanol).

Finally, a centrifugation step 26 involves centrifuging the residuals, i.e., "whole stillage", which includes the non-fermentable grain components (protein, oil, fiber, ash, and minerals, for example) and yeast yielded from the distillation and dehydration step 24 in order to separate the insoluble solids ("wet cake") from the liquid ("thin stillage"). The liquid from the centrifuge contains about 5% to 12% DS. The "wet cake" includes fiber, of which there generally are three types: (1) pericarp, with average particle sizes typically about 1 mm to 3 mm; (2) tipcap, with average particle sizes about 500 micron; (3) and fine fiber, with average particle sizes of about 250 microns. There may also be proteins and yeast bodies with a particle size of about 45 microns to about 300 microns. The fiber and other fractions may contain bound protein that is chemically and or physically attached to the fiber and other fraction.

The thin stillage typically enters evaporators in an evaporation step 28 in order to boil or flash away moisture, leaving a thick syrup which contains the soluble (dissolved) solids (mainly protein and starches/sugars) from the fermentation (25 to 40% dry solids) along with residual oil and fine fiber. The concentrated slurry can be sent to a centrifuge to separate the oil from the syrup in an oil recovery step 29. The oil can be sold as a separate high value product. The oil yield is normally about 0.9 lb/bu of corn with elevated free fatty acids content compared to traditional wet mill corn oil. This oil yield recovers only about 1/2 of the oil in the corn, with part of the oil passing with the syrup stream and the remainder being lost with the fiber/wet cake stream. About one-half of the oil inside the corn kernel remains inside the germ after the distillation and dehydration step 24, which cannot be separated in the typical dry grind process using centrifuges as the oil is bound, not free. The free fatty acids content, which is created when the oil is heated and exposed to oxygen throughout the front and back-end process, reduces the value of the oil. The (de-oil) centrifuge only removes less than 50% because the protein and oil make an emulsion, which cannot be satisfactorily separated without the use of chemicals or added mechanical separation unit operations.

The syrup, which has more than 10% oil, can be mixed with the centrifuged wet cake, and the mixture may be sold to beef and dairy feedlots as Distillers Wet Grain with Solubles (DWGS). Alternatively, the wet cake and concentrated syrup mixture may be dried in a drying step 30 and sold as Distillers Dried Grain with Solubles (DDGS) to dairy and beef feedlots. This DDGS has all the corn and yeast protein and about 50% of the oil in the starting corn material. But the value of DDGS is low due to the high percentage of fiber, and in some cases the oil is a hindrance to animal digestion and lactating cow milk quality.

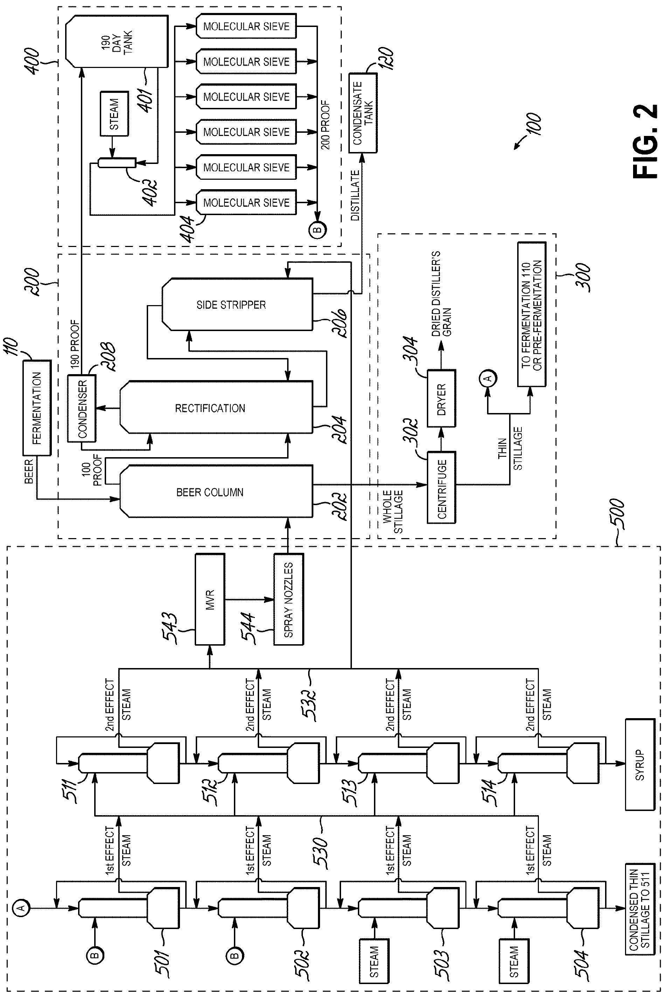

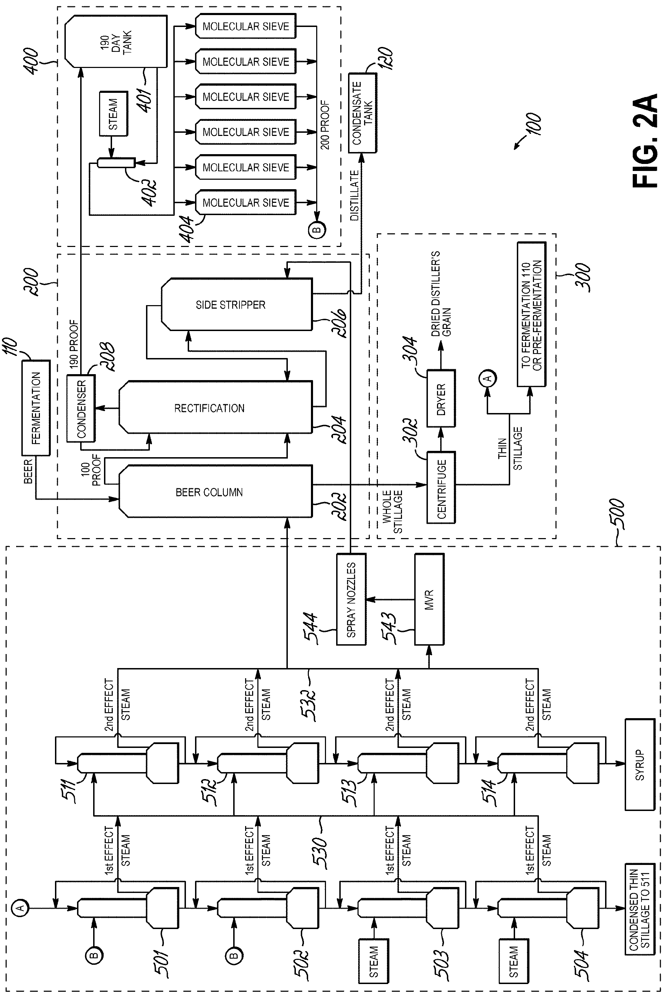

In accordance with the present invention, Fig. 2 schematically illustrates an embodiment of a method and system, collectively numeral 100, for producing alcohol, e.g., ethanol, in a grain dry-milling process, such as a corn or similar grain dry-milling process. The method and system 100 can utilize one or more mechanical vapor recompression (MVR) devices such as to improve vacuum distillation column capacity, as discussed in detail hereinbelow, and can include a fermentation process 110, a distillation process 200, a separation process 300, a dehydration process 400, and an evaporation process 500.

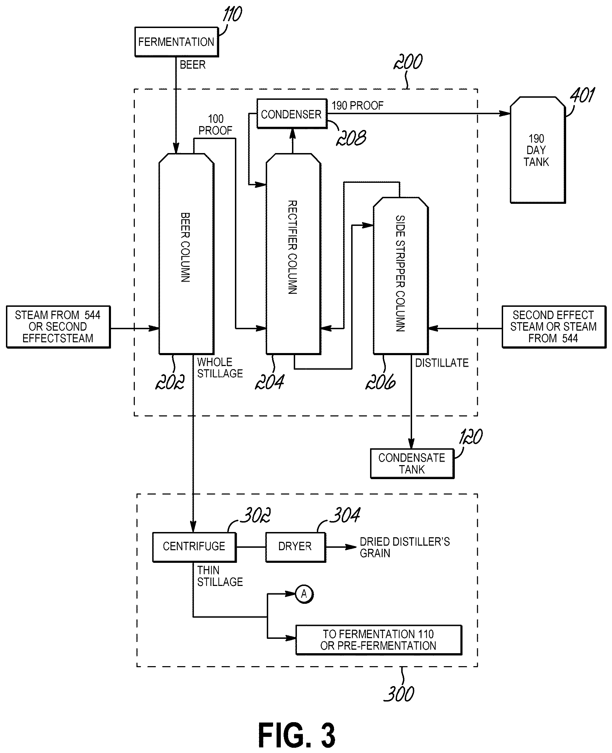

As shown in Figs. 2 and 3, the distillation process 200 can include a beer column 202, a rectifier column 204, and a side stripper column 206. Each of the beer column 202, rectifier column 204, and side stripper column 206 are typically multi-tray vessels and operate at sub-atmospheric conditions. The beer column 202 can receive ethanol-laden beer from the fermentation process 110. The beer includes ethanol, water, and milled grain components and can have an ethanol concentration of approximately 17-18% (volume/volume basis). The temperature of the beer entering the beer column 202 may be about 150°F to 160°F and will enter the column at a subatmospheric pressure of about 7 to 9 psia. The beer column 202 may be operated at a pressure in a range of about 4 psia to about 14 psia, with a corresponding temperature range of about 140°F up to about 210°F, and has a defined volumetric steam/vapor flowrate. In one embodiment, the operating pressure may be about 11 to 13 psia. In another embodiment, the operating pressure may be about 12 to 13 psia. Feed temperatures greater than 165°F in the beer column 202 can cause flashing within the vessel, increasing the potential for beer or mash to carryover the top of the beer column 202 and into the rectification column 204. De-superheated steam supplied by the spray nozzles 544 provides heat for boiling off the ethanol from the beer in the beer column 202. The source and routing of this de-superheated steam is described in greater detail below. In one example, the temperature of the de-superheated steam may be about 205°F and at a subatmospheric pressure of about 13 psia. The range of the de-superheated steam temperature is a function of the pressure, which can be in a range of about 11 psia to about 13 psia with a corresponding temperature range of about 190°F to about 205°F, for example. The de-superheated steam can be mixed directly with the beer as the beer cascades down through the beer column 202. The overhead ethanol vapor leaving the beer column 202 is about 50% ethanol or 100 proof.

Next, the about 100 proof ethanol vapor from the beer column 202 enters the rectifier column 204 where ethanol vapor having a higher concentration of ethanol (190 proof or 95% pure) is generated as an overhead vapor at a pressure from about 4 to about 6 psia. Accordingly, the operating pressure of the rectifier column 204 may be from about 5 to about 10 psia. In one example, the rectifier column 204 can be operated at a subatmospheric pressure in a range of about 5 psia to about 6 psia. Vapor flowing out of the rectifier column 204 is condensed into a liquid by a condenser 208. The condenser 208 may use cooling water as the condensing medium. The overhead condensed ethanol may be split so that a portion (e.g., two-thirds) is recycled back into the rectifier column 204 and the remainder (e.g., one-third) is sent to a 190-day tank 401 for further processing. The thermal energy or heat that drives the rectifier column 204 can be present in the hot 100 proof vapors that enter the rectifier column 204. The bottoms from the rectifier column 204, which have an ethanol concentration of about 20% (or 40 proof), are typically circulated to the side stripper column 206.

The side stripper column 206 strips ethanol from the rectification bottom stream and produces a second stream of about 100 proof vapor that is circulated back into the rectifier column 204 for further dehydration or separation of the ethanol from the distillate stream. The ethanol proof of the vapor circulated back to the rectifier column 204 can have a range of about 60 to about 120. The side stripper column 206 may operate at a pressure of from about 8 to about 13 psia. In one example, the side stripper column 206 can be operated at a pressure of from about 8 to about 9 psia. In another example, the side stripper column 206 can be operated at a pressure of about 13 psia. The side stripper column 206 can be heated by the thermal energy of second effect steam, as shown and further discussed below, or may be heated by direct steam injection into the column. The bottoms or distillate from the side stripper column 206 is mostly hot water, which can be sent to a condensate tank 120 and/or optionally used in initially slurrying the ground grain.

With reference now to Fig. 2A, in a variation of that which is shown in Fig. 2, the thermal energy of second effect steam can provide heat for boiling off the ethanol from the beer in the beer column 202, and the side stripper column 206 can be heated by the thermal energy of the de-superheated steam from spray nozzles 544. Here again, the source and routing of this de-superheated steam is described in greater detail below.

With continuing reference now to Figs. 2 and 3, the separation process 300 receives beer bottoms or whole stillage containing mostly water, dissolved materials, unfermented solids and spent fermentation agent from the milled grain and subsequent fermentation process 110. The separation process 300 receives the whole stillage and removes the solids known as distiller's grains. In particular, the whole stillage fom the beer column 202 can be piped to a centrifuge 302 or other separation device, which separates the whole stillage into solids known as distiller's grains and a liquid known as thin stillage or centrate. The distiller's grains can be conveyed to a dryer 304 for further drying. Because distiller's grains can be rich in fiber and protein, they can be used as a feed for livestock. The liquid portion or thin stillage leaving the centrifuge 302 may be sent on or divided into one or more portions, as follows. All or a portion of the resulting thin stillage can be piped to the evaporation process 500 of the system, which is further discussed in more detail below. A second optional portion can be piped to fermentation 110 and/or pre-fermentation, such as to create a slurry with the ground grain. A third optional portion can be further utilized or processed into an additional component as follows, including but not limited to use in anaerobic digestion, as a nutrient feed source for a biochemical or biofuel fermentation or conversion process, as feed for an herbicide or a fertilizer, utilized as a feed source for zein protein or any other viable usage.

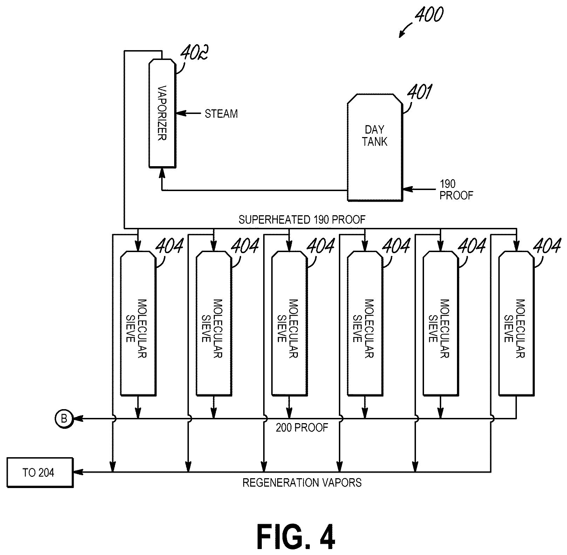

With reference now to Figs. 2 and 4, the dehydration process 400 receives liquid 190 proof hydrous ethanol from the condenser 208 in the distillation process 200 and removes most of the remaining water in that ethanol. In the dehydration process 400, the liquid 190 proof (hydrous) ethanol from the 190 day tank 401 is vaporized via a steam vaporizer 402 to ensure no condensing of the hydrous ethanol occurs in the molecular sieves 404. To that end, the superheated 190 proof ethanol is sent to a series of molecular sieves 404 where excess water is removed to produce about a 99.0% (or greater) by weight ethanol stream commonly referred to as anhydrous ethanol or 200 proof ethanol. The molecular sieves 404 can be multi-column systems containing vessels, vaporizers, regeneration condensers, and reclaim heat exchangers. In one example, each of the molecular sieves 404 include a packed column of desiccant beads that attract water but reject ethanol to remove the water from the hydrous ethanol. The resulting hot 200 proof ethanol vapor leaving the molecular sieve 404 can be sent to the evaporation process 500, as further discussed below. Once the desiccant beads are saturated with water, they can be regenerated by pulling a high vacuum, which can be accomplished by taking them offline. The high vacuum flashes the water and any ethanol from the desiccant beads, and the beads are ready to be placed in service again. The vapors released in this regeneration cycle can be sent back to the rectifier column 204 to be captured. It should be understood that the molecular sieves 404 may be replaced with other types of dehydration technologies, e.g., steel or ceramic membranes, pervapor separation, or chemical separation, all of which can perform the desired dehydration function.

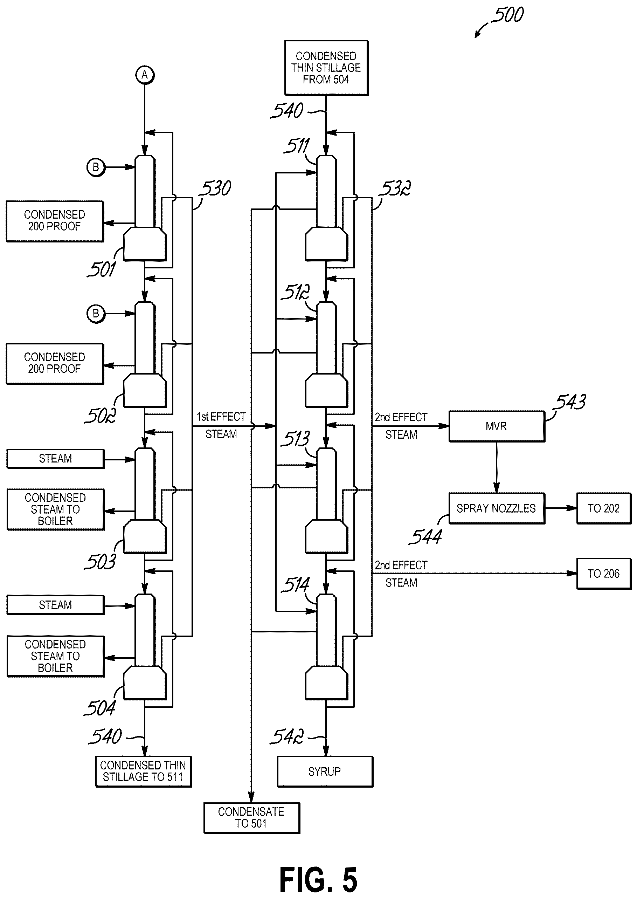

With reference now to Figs. 2 and 5, two sets of evaporators, which may be arranged in a series fashion, can be utilized in the evaporation process 500, in part, to reduce or concentrate thin stillage from the separation process 300 to a thick syrup, which can be fed to the dryer 304 for further drying. The thin stillage may contain approximately 2 to 8% solids, with a range of about 4 to 9%, at the beginning of the evaporation process 500, and the resulting syrup may have a solids concentration of 34-36%, with a range of about 25 to 50% solids concentration. The two sets of evaporators, which together provide a double effect evaporation process, can include a first set of evaporators 501, 502, 503, 504, known as first effect evaporators and a second set of evaporators 511, 512, 513, 514, known as second effect evaporators. Although each set of evaporators is illustrated as having four evaporators, each set could include less than four, e.g., one, two, or three, or more than four evaporators, as needed. Additionally, although only a first and second effect evaporator setup is illustrated, more than or less than two effects may be provided. With this setup, energy for the distillation process 200 can be created from the evaporation of water from process condensate, evaporation of water from thin stillage, and the like, or combinations thereof, as discussed next.

Each of the evaporators in the evaporation process 500 can include a shell and tube heat exchanger in which a heating vapor is isolated in the shell side. The set of first effect evaporators are heated by a heating vapor such as clean plant steam from a boiler (not shown) and/or hot 200 proof ethanol vapor from the molecular sieves 404. In one embodiment, the heating vapor for the evaporators 503, 504 is steam from the plant boiler (not shown), while the heating vapor for evaporators 501, 502 is the hot 200 proof ethanol vapor. It should be understood here that various modifications may be made altering which of the first effect evaporators 501, 502, 503, 504 are provided with steam and/or the hot 200 proof ethanol vapor. In one example, the clean plant steam may be at a pressure of about 24 psia and a temperature of about 239°F. In another example, the temperature may be in a range of about 237°F to 243°F. In another example, the clean plant steam may be at a pressure between 14 psia and 24 psia and at a temperature from 209°F to 239°F. And in yet another example, the hot 200 proof ethanol vapor may be at a pressure of about 50 psia and a temperature of about 280°F. In still another example, the hot 200 proof ethanol vapor may be at a pressure in a range of about 30 psia and about 65 psia and at a temperature from about 250°F to about 300°F. In one example, the hot 200 proof ethanol vapor is not mixed with plant steam. The heating vapor from the incoming steam or hot 200 proof ethanol vapor will condense and exit as condensate or 200 proof liquid ethanol through condensate lines. The steam condensate can be returned to the boiler (not shown). The condensed 200 proof ethanol can be sent through a single exchanger or a series of exchangers (not shown) to exchange additional heat into the 190 proof ethanol liquid feed to the dehydration step 400. The cooled 200 proof ethanol, which is the main final product of the ethanol facility, is then sent to a 200 proof tank (not shown). The cooled 200 proof ethanol can optionally be added to the 200 proof vapor (desuperheat) feeding the evaporator 501 and/or 502 to improve the overall heat transfer and vapor condensing capacity in order to reclaim the heat of condensing within the evaporator chest.

With continuing reference to Figs. 2 and 5, the tube-side fluid entering the first effect evaporators may vary. For example, at least a portion of the thin stillage from the separation process 300 can be sent (directly or indirectly) to the evaporators 501, 502, 503, 504. In another example, condensate from the second effect evaporators 511, 512, 513, 514 can be sent to the evaporators 501, 502, 503, 504. In another option, a portion of the condensate can be sent to the front end of the method and system 100, such as to help create a slurry with the ground grain. It should be understood here that various modifications may be made altering which of the first effect evaporators 501, 502, 503, 504 are provided with thin stillage or other liquid(s), including evap condensate, for example. Here, thin stillage from centrifuge 302 can enter the top of the evaporator 501 and ultimately leave the bottom of evaporator 504 more concentrated. In one example, the thin stillage exiting the evaporator 501, 502, 503, 504 may be split so that a portion is recycled to the top of each respective evaporator 501, 502, 503, 504. The concentrated thin stillage finally exits the bottom of evaporator 504 via a stillage line 540. The concentrated thin stillage may be referred to as first-concentrated thin stillage after it leaves the first set of evaporators. Liquid that is boiled off or evaporated from the thin stillage in the evaporators 501, 502, 503, 504 can enter a first effect steam line 530 as steam. Because evaporators 501, 502, 503, 504 produce first effect steam that is used to heat the second effect evaporators 511, 512, 513, 514, they are known as first effect evaporators. The various lines leading to the evaporators may be valved so that any one of the four evaporators 501, 502, 503, 504 can be selectively taken off-line and by-passed, for example, during maintenance work. The ethanol facility can be designed to operate at full capacity with three (or less) first effect evaporators on-line. Thus, any one of the four evaporators can be isolated and shut down for cleaning and maintenance without compromising the operation of the plant. Depending on the facility production rate, it is known by one skilled in the art that the number of first effect evaporators can vary from 1 to more than 4. The total number of evaporators typically is driven by the production volume requirements.

With continuing reference to Figs. 2 and 5, the arrangement and operation of the second effect evaporators 511, 512, 513, 514 is somewhat similar to the first effect evaporators 501, 502, 503, 504, except, for example, that they operate at a lower pressure and temperature and are heated by first effect steam collected from first effect evaporators 501, 502, 503, 504. The first effect steam generated by the first effect evaporators can be at a pressure of about 12 psia to about 15 psia and at a temperature of about 202°F to about 215°F. In another example, the first effect steam generated by the first effect evaporators can be at a pressure of about 14 psia to about 15 psia and at a temperature of about 210°F to about 215°F. The second effect evaporators process the first-concentrated thin stillage from the stillage line 540 from evaporator 504. Specifically, the first-concentrated thin stillage from the stillage line 540 enters evaporator 511, which further concentrates the thin stillage. The thin stillage exiting the evaporator 511 may be split so that a portion is recycled to the top of the evaporator 511 and the remainder enters the next evaporator 512. In this manner, the thin stillage is concentrated by each of the evaporators 511, 512, 513, 514. The further concentrated thin stillage may be referred to as second-concentrated thin stillage after it leaves the second set of evaporators. The second-concentrated thin stillage finally exits the evaporator 514 as a syrup that is conveyed via a syrup line 542 back to, for example, a syrup storage tank (not shown) and/or the dryer 304.

The steam generated in the second effect evaporators 511, 512, 513, 514 is second effect steam. This relatively low pressure, second effect steam is collected from the various outlets of second effect evaporators 511, 512, 513, 514 by a second effect steam line 532. The second effect steam line 532 then conveys at least a portion of the second effect steam to the MVR device 543 and a portion conveyed directly to the side stripper 206 (See Fig. 2) or, alternatively, at least a portion can be conveyed to the MVR device 543 and a portion conveyed directly to the beer column 202 (See Fig. 2A), as described in greater detailed below. In another example, at least a portion of the second effect steam may be utilized to pre-heat the beer feed prior to entering the beer column 202. Because the evaporators 511, 512, 513, 514 produce second effect steam they are known as second effect evaporators. The first effect steam is condensed with at least a portion of the condensate being optionally sent to evaporator 501 with another portion optionally being sent to the front end of the method and system 100, such as to help create a slurry with the ground grain. As with the first effect evaporators, the various lines leading to the evaporators may be valved so that any one of the four evaporators 511, 512, 513, 514 can be selectively taken off-line and by-passed for maintenance allowing for continuous operation. And depending on the facility production rate, it is known by one skilled in the art that the number of first effect evaporators can vary from 1 to more than 4. The total number of evaporators typically is driven by the production volume requirements.

The second effect steam generated by the first effect evaporators can be at a subatmospheric pressure of about 7 psia to about 10 psia and at a temperature of about 176°F to about 193°F. In one example, the second effect steam generated by the first effect evaporators can be at a subatmospheric pressure of about 8 psia to about 9 psia and at a temperature of about 182°F to about 187°F. In one example, the second effect steam generated by the first effect evaporators can be at a subatmospheric pressure of about 8.5 psia and at a temperature of about 185°F. The range of the second effect steam temperature is a function of the pressure. It should be recognized that the order of the evaporators through which the thin stillage passes may vary. As described above, the thin stillage passes through the evaporators 501, 502, 503, 504, 511, 512, 513, 514, in order. Other modifications and variations can be contemplated. Modifying the order of the evaporators through which the thin stillage passes does not affect the order and configuration of the first and second effect steam flows.

Further concerning Figs. 2 and 5, the MVR device 543 or the like can receive at least a portion of the second effect steam. Specifically, the MVR device 543 subjects the second effect steam to mechanical vapor recompression by means and methods known in the art. Here, the vapor pressure/vapor density of the second effect steam can be increased and vapor volume decreased providing for an increased volumetric flowrate of steam/vapor. In particular, the MVR device 543 takes a low value waste heat, which here is the second effect steam, and compresses it to a higher temperature/pressure to create useful energy. In one example, the MVR device 543 can include a centrifugal steam compressor (e.g., a single stage centrifugal compressor), a steam compressor fan (e.g., a turbo fan), and the like, as are known in the art. One such suitable centrifugal steam compressor is the Piller VapoMax available from Piller TSC Blower Corp of Schenectady, New York. One such suitable steam compressor fan is the Piller Vapoflex available from Piller TSC Blower Corp of Schenectady, New York. In another example, the MVR device may be replaced by a heat pump (not shown), as are known in the art, which acts in a similar manner as the MVR device 543 by compressing a working fluid to higher temperature and pressure. The working fluid - in this case water vapor (e.g., the second effect steam) - has a higher condensing temperature due to the increase in pressure. The heat pump enables a low enthalpy vapor to be "upgraded" to a higher temperature and pressure to allow for higher value energy recovery. In addition, more than one MVR device 543 or the like may be utilized in parallel or in series.

The outgoing MVR steam generated by the MVR device 543 can be at a subatmospheric pressure of about 9 psia to about 13 psia and at a temperature of about 187°F to about 205°F. In one example, the outgoing MVR steam generated by the MVR device 543 can be at a subatmospheric pressure of about 9 to 11 psia and at a temperature of from about 187°F to about 198°F. In another example, the outgoing MVR steam generated by the MVR device 543 can be at a subatmospheric pressure of about 12 to 13 psia and at a temperature of about 250°F. The range of the outgoing MVR steam temperature is a function of the pressure. The increased pressure can desirably raise the density of the vapor/steam by about 50%. Increasing the pressure of the 2^{nd} effect steam here at the MVR device 543 can result in increases in the pressure of the beer column 202 as well as the side stripper 206 and rectifier 204, thereby helping eliminate bottlenecking thereat and increasing equipment capacity by up to 20% or more.

Due to the increased temperature of the outgoing MVR steam, the MVR steam can be sent on and subjected to cooler liquid from one or more spray nozzles 544, as are known in the art, whereat the steam is cooled or de-superheated via sprayed liquid to a temperature of about 187°F to about 205°F, to reduce vapor temperature to neat saturation and prevent fouling at the bottom of the beer column 202. In one example, the MVR steam is cooled to a temperature of about 187°F to about 205°F. In another example, the MVR steam is cooled to a temperature of about 187°F to about 198°F. In another example, the MVR steam is cooled to a temperature of about 205°F. In one example, the liquid for the spray nozzles 544 can be first effect condensate, thin stillage, and the like.

In one embodiment, the spray nozzles 544 can be replaced with a heat exchanger, as are known in the art, that receives and cools or de-superheats the MVR steam via indirect cooling such as by a liquid. In particular, the temperature of the MVR steam can be adjusted or controlled, by means and methods known in the art, to be a specified temperature or within a certain range(s). In one example, the cooling liquid for the heat exchanger can be thin stillage, first effect condensate, and the like, which does not mix with the MVR steam. The heat exchanger may be a shell and tube or a plate and frame type heat exchanger, as are known in the art. One such suitable heat exchanger is the Falling Film Evaporator available from Dedert of Olympia Fields, Illinois.

The de-superheated steam that comes from the spray nozzles 544 provides heat for boiling off the ethanol from the beer in the beer column 202 and can be sent to the beer column 202 (See Fig. 2) or alternatively to the side stripper column 206 (See Fig. 2A) at a desirable pressure, as indicated above. The ratio of the resulting steam sent to the beer column 202 and steam sent to the side stripper column 206 may be in a range of, for example, 90% to 10%, 80% to 20%, or 70% to 30%, or another steam ratio that provides sufficient thermal energy or heat for distillation.

With reference again to Figs. 2 and 3, inside the beer column 202, fermented ethanol present in the beer produced by the fermentation process 110 is boiled out as overhead of about 100 proof vapor with a potential range of 90 to 120 proof. The de-superheated steam that comes from the spray nozzles 544 provides the necessary steam to remove about 99.5% or greater of the beer's ethanol as about 100 proof overhead vapor. The steam requirements of the beer column 202 of the distillation process 200 determines the evaporation capacity of the evaporation process 500. When the steam requirement of the beer column 202 increases, the evaporation capacity of the evaporation process 500 increases, so that more thin stillage from the separation process 300 can be conveyed to the evaporation process 500 and less thin stillage sent elsewhere, such as to fermentation 110 or pre-fermentation, as discussed above. When the beer column 202 requires less steam, then less thin stillage is sent to the evaporation process 500 and more is used elsewhere. On average, approximately 50% of the thin stillage from the separation process 300 is sent to the evaporation process 500, with a range of about 40 to about 60% as typical. This range can be more broadly extended due to the integration of the condensate evap as part of the overall energy and distillation system.

The increased vapor pressure provided by the MVR device 543 can desirably raise the density of the vapor/steam by about 50%. In turn, the vapor volume - at equal mass flow - can drop by about 33%. Increasing the pressure of the 2^{nd} effect steam, via the MVR device 543, can increase the pressure of the beer column as well as the side stripper and rectifier, thereby helping eliminate bottlenecking thereat and increasing equipment capacity by up to 20% or more.

### EXAMPLE - MVR Effect

In this example, a 2nd effect steam of 10,000 lb/hr at 8.5 psia and 185°F having a volumetric flowrate of 447,337 ft³/hr was provided as a baseline. It is noted that the capacity of a downstream beer column is/was set by the vapor/steam velocity and, therefore, by the volumetric flowrate. To understand the effect of MVR, the 2nd effect steam then was subjected to an MVR device with the outogoing MVR steam being notably compressed to 13 psia and having a temperature of about 250°F. The MVR steam then was de-superheated with liquid via spray nozzles to a temperature of about 205°F. After compression, the MVR steam with mass flow of 10,000 lb/hr at 13 psia and 205°F had a volumetric flowrate of 300,600 ft³/hr. Since the equipment is gas volume limited - additional mass now could be added to the system. To that end, to revise or increase the capacity conditions, a 2nd effect steam of 14,800 lb/hr at 8.5 psia and 185F with a volumetric flowrate of 662,059 ft³/hr now could be sent to the MVR device, which can be compressed to 13 psia and then de-superheated. After compression, the MVR stream with a mass flow of 14,800 lb/hr at 13 psia and 205°F had a volumetric flowrate of 444,889 ft³/hr. To that end, the addition of the MVR device provided an additional 48% capacity, which can desirably improve vacuum distillation column capacity and help eliminate bottlenecking in distillation systems in an economic manner.

While the present invention has been illustrated by a description of various embodiments and while these embodiments have been described in considerable detail, it is not the intention of the applicant to restrict or in any way limit the scope of the appended claims to such detail. For example, while the MVR device 543 (and corresponding spray nozzles or heat exchanger) has been shown as situated after the second effect evaporators to receive second effect steam, it should be understood that the MVR device 543 or one or more other MVR devices (and corresponding spray nozzles or heat exchanger) may be situated in other locations of the system and method, such as between the steam vaporizer 402 and molecular sieves 404, for example. In addition, it is contemplated that the MVR device 543 could be replaced by a thermal vapor recompression (TVR) device (not shown) utilizing TVR, as known in the art, by combining plant steam (or other plant sourced steam) with the second effect steam, for example, to ultimately increase the capacity of a distillation system in a like manner as discussed in detail above. Additional advantages and modifications will readily appear to those skilled in the art. Thus, the invention in its broader aspects is therefore not limited to the specific details, representative apparatus and method, and illustrative example shown and described. Accordingly, departures may be made from such details without departing from the scope of applicant's general inventive concept.

The following embodiments are according to the invention:
1. A method according to the invention for distilling alcohol in an alcohol production process, the method comprising:
   fermenting a mixture of water and milled grain to produce alcohol-laden beer;
   distilling the alcohol-laden beer in a beer column maintained at a subatmospheric pressure to produce a vapor, including alcohol, and whole stillage;
   separating thin stillage from the whole stillage;
   evaporating water from all or a portion of the separated thin stillage via one or more evaporators to produce a first effect steam from evaporation of the water from the thin stillage to produce a first-concentrated thin stillage from the evaporation of the thin stillage, wherein the one or more evaporators and the one or more other evaporators together define a first effect evaporator system;
   evaporating water from the first-concentrated thin stillage via one or more additional evaporators defining a second effect evaporator system with heat from the first effect steam to produce second-concentrated thin stillage and second effect steam;
   supplying at least a portion of the second effect steam, which defines incoming second effect steam, to mechanical vapor recompression to produce outgoing steam with increased vapor pressure and increased temperature relative to the incoming second effect steam; and
   supplying the outgoing steam from the mechanical vapor recompression to a distillation column for distilling the alcohol-laden beer to produce alcohol whereby throughput of the distillation column is increased.
2. The method according to the invention further comprising, after mechanical vapor recompression but prior to supplying to the distillation column, cooling the outgoing steam.
3. The method according to the invention further comprising, after mechanical vapor recompression but prior to supplying to the distillation column, cooling the outgoing steam to a temperature of about 187°F to about 205°F.
4. The method according to the invention further comprising, after mechanical vapor recompression but prior to supplying to the distillation column, cooling the outgoing steam, via a spray nozzle(s) and/or a heat exchanger(s).
5. The method according to the invention further comprising, after mechanical vapor recompression but prior to supplying to the distillation column, cooling the outgoing steam by directly or indirectly subjecting the outgoing steam to lower temperature liquid(s) and/or gas(es).
6. The method according to the invention wherein supplying at least a portion of the second effect steam, which defines incoming second effect steam, to mechanical vapor recompression comprises supplying at least a portion of the second effect steam, which defines incoming second effect steam, to a mechanical vapor recompression (MVR) device to produce outgoing steam with increased vapor pressure and increased temperature relative to the incoming second effect steam; and supplying the outgoing steam from the MVR device to a distillation column for distilling the alcohol-laden beer to produce alcohol whereby throughput of the distillation column is increased.
7. The method according to the invention wherein the MVR device is selected from a centrifugal steam compressor, a steam compressor fan, or a turbo fan.
8. The method according to the invention wherein supplying at least a portion of the second effect steam, which defines incoming second effect steam, to mechanical vapor recompression comprises supplying at least a portion of the second effect steam, which defines incoming second effect steam, to a heat pump device to produce outgoing steam with increased vapor pressure and increased temperature relative to the incoming second effect steam; and supplying the outgoing steam from the heat pump device to a distillation column for distilling the alcohol-laden beer to produce alcohol whereby throughput of the distillation column is increased.
9. The method according to the invention wherein the distillation column is the beer column or a side stripper column.
10. The method according to the invention wherein the one or more evaporators comprises two or more evaporators arranged in a series to define the first effect evaporator system and produce the first effect steam and the one or more additional evaporators comprises two or more evaporators arranged in a series to define the second effect evaporator system and produce the second effect steam.
11. The method according to the invention wherein the outgoing steam is at a subatmospheric pressure of about 9 psia to about 13 psia.
12. The method according to the invention wherein the outgoing steam is at a temperature of about 187°F to about 205°F.
13. A second method according to the invention for distilling alcohol in an alcohol production process, the method comprising:
   fermenting a mixture of water and milled grain to produce alcohol-laden beer;
   distilling the alcohol-laden beer in a beer column maintained at a subatmospheric pressure to produce a vapor, including alcohol, and whole stillage;
   separating thin stillage from the whole stillage;
   evaporating water from all or a portion of the separated thin stillage via one or more evaporators to produce a first effect steam from evaporation of the water from the thin stillage to produce a first-concentrated thin stillage from the evaporation of the thin stillage, wherein the one or more evaporators and the one or more other evaporators together define a first effect evaporator system;
   evaporating water from the first-concentrated thin stillage via one or more additional evaporators defining a second effect evaporator system with heat from the first effect steam to produce second-concentrated thin stillage and second effect steam;
   supplying at least a portion of the second effect steam, which defines incoming second effect steam, to a mechanical vapor recompression device to produce outgoing steam with increased vapor pressure and increased temperature relative to the incoming second effect steam; and
   cooling the outgoing steam from the mechanical vapor recompression device and supplying the cooled steam to the beer column or a rectifier column for distilling the alcohol-laden beer to produce alcohol whereby throughput of the beer column is increased.
14. A system according to the invention for distilling alcohol in an alcohol production process, the system comprising:
   a beer column that receives alcohol-laden beer, the beer column distills the alcohol-laden beer at a subatmospheric pressure to produce a vapor, including ethanol, and whole stillage;
   a separation device that is situated after the beer column and that receives the whole stillage and separates thin stillage from the whole stillage;
   a first effect evaporator system that includes one or more evaporators that receive all or a portion of the thin stillage from the separation device, the one or more evaporators configured to evaporate water from the thin stillage to produce first-concentrated thin stillage, the first effect evaporator system configured to produce a first effect steam from the evaporation of the water from the thin stillage;
   a second effect evaporator system that is situated after the first effect evaporator system and includes one or more evaporators, which receive the first-concentrated thin stillage and evaporate water from the first-concentrated thin stillage with heat from the first effect steam to produce second-concentrated thin stillage and second effect steam;
   a mechanical vapor recompression (MVR) device that is situated after the second effect evaporator system and that receives at least a portion of the second effect steam, which defines incoming second effect steam, the MVR device configured to produce outgoing steam with increased vapor pressure and increased temperature relative to the incoming second effect steam; and
   a distillation column for distilling the alcohol-laden beer to produce alcohol selected from the beer column or a rectifier column, the distillation column receives the outgoing steam from the MVR device such that throughput of the beer column is increased.
15. The system according to the invention further comprising a cooling device that is situated after the MVR device and prior to the distillation column, the cooling device configured to cool the outgoing steam.
16. The system according to the invention wherein the cooling device includes a spray nozzle(s) and/or a heat exchanger(s).
17. The system according to the invention wherein the MVR device is selected from a centrifugal steam compressor, a steam compressor fan, or a turbo fan.
18. The system according to the invention wherein the one or more evaporators of the first effect evaporator system comprises two or more evaporators arranged in a series and the one or more evaporators of the second effect evaporator system comprises two or more other evaporators arranged in a series.
19. The system according to the invention wherein the outgoing steam is at a subatmospheric pressure of about 9 psia to about 13 psia.
20. The system according to the invention wherein the outgoing steam is at a temperature of about 187°F to about 205°F.

## Claims

1. A method for distilling alcohol in an alcohol production process, the method comprising:
fermenting a mixture of water and milled grain to produce alcohol-laden beer;
distilling the alcohol-laden beer in a beer column maintained at a subatmospheric pressure to produce a vapor, including alcohol, and whole stillage;
separating thin stillage from the whole stillage;
evaporating water from all or a portion of the separated thin stillage via one or more evaporators to produce a first effect steam from evaporation of the water from the thin stillage to produce a first-concentrated thin stillage from the evaporation of the thin stillage, wherein the one or more evaporators and the one or more other evaporators together define a first effect evaporator system;
evaporating water from the first-concentrated thin stillage via one or more additional evaporators defining a second effect evaporator system with heat from the first effect steam to produce second-concentrated thin stillage and second effect steam;
supplying at least a portion of the second effect steam, which defines incoming second effect steam, to mechanical vapor recompression to produce outgoing steam with increased vapor pressure and increased temperature relative to the incoming second effect steam; and
supplying the outgoing steam from the mechanical vapor recompression to a distillation column for distilling the alcohol-laden beer to produce alcohol whereby throughput of the distillation column is increased.

2. The method of claim 1 further comprising, after mechanical vapor recompression but prior to supplying to the distillation column, cooling the outgoing steam; and/or after mechanical vapor recompression but prior to supplying to the distillation column, cooling the outgoing steam to a temperature of about 187°F to about 205°F; and/or, after mechanical vapor recompression but prior to supplying to the distillation column, cooling the outgoing steam, via a spray nozzle(s) and/or a heat exchanger(s); and/or after mechanical vapor recompression but prior to supplying to the distillation column, cooling the outgoing steam by directly or indirectly subjecting the outgoing steam to lower temperature liquid(s) and/or gas(es).

3. The method of claim 1 or 2 wherein supplying at least a portion of the second effect steam, which defines incoming second effect steam, to mechanical vapor recompression comprises supplying at least a portion of the second effect steam, which defines incoming second effect steam, to a mechanical vapor recompression (MVR) device to produce outgoing steam with increased vapor pressure and increased temperature relative to the incoming second effect steam; and supplying the outgoing steam from the MVR device to a distillation column for distilling the alcohol-laden beer to produce alcohol whereby throughput of the distillation column is increased.

4. The method of any one of claims 1 to 3 wherein the MVR device is selected from a centrifugal steam compressor, a steam compressor fan, or a turbo fan.

5. The method of any one of claims 1 to 4 wherein supplying at least a portion of the second effect steam, which defines incoming second effect steam, to mechanical vapor recompression comprises supplying at least a portion of the second effect steam, which defines incoming second effect steam, to a heat pump device to produce outgoing steam with increased vapor pressure and increased temperature relative to the incoming second effect steam; and supplying the outgoing steam from the heat pump device to a distillation column for distilling the alcohol-laden beer to produce alcohol whereby throughput of the distillation column is increased.

6. The method of any one of claims 1 to 5 wherein the distillation column is the beer column or a side stripper column.

7. The method of any one of claims 1 to 6 wherein the one or more evaporators comprises two or more evaporators arranged in a series to define the first effect evaporator system and produce the first effect steam and the one or more additional evaporators comprises two or more evaporators arranged in a series to define the second effect evaporator system and produce the second effect steam.

8. The method of any one of claims 1 to 7 wherein the outgoing steam is at a subatmospheric pressure of about 9 psia to about 13 psia.; and/or wherein the outgoing steam is at a temperature of about 187°F to about 205°F.

9. A method for distilling alcohol in an alcohol production process, the method comprising:
fermenting a mixture of water and milled grain to produce alcohol-laden beer;
distilling the alcohol-laden beer in a beer column maintained at a subatmospheric pressure to produce a vapor, including alcohol, and whole stillage;
separating thin stillage from the whole stillage;
evaporating water from all or a portion of the separated thin stillage via one or more evaporators to produce a first effect steam from evaporation of the water from the thin stillage to produce a first-concentrated thin stillage from the evaporation of the thin stillage, wherein the one or more evaporators and the one or more other evaporators together define a first effect evaporator system;
evaporating water from the first-concentrated thin stillage via one or more additional evaporators defining a second effect evaporator system with heat from the first effect steam to produce second-concentrated thin stillage and second effect steam;
supplying at least a portion of the second effect steam, which defines incoming second effect steam, to a mechanical vapor recompression device to produce outgoing steam with increased vapor pressure and increased temperature relative to the incoming second effect steam; and
cooling the outgoing steam from the mechanical vapor recompression device and supplying the cooled steam to the beer column or a rectifier column for distilling the alcohol-laden beer to produce alcohol whereby throughput of the beer column is increased.

10. A system for distilling alcohol in an alcohol production process, the system comprising:
a beer column that receives alcohol-laden beer, the beer column distills the alcohol-laden beer at a subatmospheric pressure to produce a vapor, including ethanol, and whole stillage;
a separation device that is situated after the beer column and that receives the whole stillage and separates thin stillage from the whole stillage;
a first effect evaporator system that includes one or more evaporators that receive all or a portion of the thin stillage from the separation device, the one or more evaporators configured to evaporate water from the thin stillage to produce first-concentrated thin stillage, the first effect evaporator system configured to produce a first effect steam from the evaporation of the water from the thin stillage;
a second effect evaporator system that is situated after the first effect evaporator system and includes one or more evaporators, which receive the first-concentrated thin stillage and evaporate water from the first-concentrated thin stillage with heat from the first effect steam to produce second-concentrated thin stillage and second effect steam;
a mechanical vapor recompression (MVR) device that is situated after the second effect evaporator system and that receives at least a portion of the second effect steam, which defines incoming second effect steam, the MVR device configured to produce outgoing steam with increased vapor pressure and increased temperature relative to the incoming second effect steam; and
a distillation column for distilling the alcohol-laden beer to produce alcohol selected from the beer column or a rectifier column, the distillation column receives the outgoing steam from the MVR device such that throughput of the beer column is increased.

11. The system of claim 10 further comprising a cooling device that is situated after the MVR device and prior to the distillation column, the cooling device configured to cool the outgoing steam.

12. The system of claim 11 wherein the cooling device includes a spray nozzle(s) and/or a heat exchanger(s).

13. The system of any one of claims 10 to 12 wherein the MVR device is selected from a centrifugal steam compressor, a steam compressor fan, or a turbo fan.

14. The system of any one of claims 10 to 13 wherein the one or more evaporators of the first effect evaporator system comprises two or more evaporators arranged in a series and the one or more evaporators of the second effect evaporator system comprises two or more other evaporators arranged in a series.

15. The system of any one of claims 10 to 14 wherein the outgoing steam is at a subatmospheric pressure of about 9 psia to about 13 psia; and/or wherein the outgoing steam is at a temperature of about 187°F to about 205°F.
